# EUROPÄISCHE PATENTSCHRIFT

(11) **EP 0 792 720 B1**
(45) Veröffentlichungstag und Bekanntmachung des Hinweises auf die Patenterteilung: **27.03.2002**
(21) Anmeldenummer: 97100091.4
(22) Anmeldetag: 04.01.1997
(51) Int. Cl.: B23Q 11/12, F16N 7/00, F01M 1/00

(54) **Werkzeugmaschine mit einer Anzahl von Schmierstellen**
Machine tool with lubrication points
Machine outil avec points d'huilage

(30) Priorität: 01.03.1996 DE 19607783
(43) Veröffentlichungstag der Anmeldung: 03.09.1997
(73) Patentinhaber: CHIRON-WERKE GMBH & CO. KG, 78532 Tuttlingen (DE)
(72) Erfinder: Winkler, Hans-Henning, Dr.-Ing., 78532 Tuttlingen (DE); Deufel, Karl, 78600 Kolbingen (DE)
(74) Vertreter: Otten, Hajo, Dr.-Ing.

(56) Entgegenhaltungen:
- US-A- 3 678 631
- DECKER, K.-H.: "Maschinenelemente: Gestaltung und berechnung" 1985 , HANSER , MÜNCHEN XP002034180 siehe sog. "Staufferbuchse" * Seite 289 - Seite 290; Abbildungen 17.13,17.14 *

## Beschreibung

Die vorliegende Erfindung betrifft eine Werkzeugmaschine mit einer Anzahl von Schmierstellen, denen Schmiermittel zugeführt werden muß, wobei zumindest einige der Schmierstellen durch ein System von Schmiermittelleitungen mit einer zentralen Zufuhrstation für Schmiermittel verbunden sind.

Eine derartige Werkzeugmaschine ist aus der US 3,678,631 bekannt.

Bei der bekannten Werkzeugmaschine ist ein automatisch betätigtes Schmiersystem vorgesehen, das im Betrieb ständig verschiedene Schmierstellen über ein System von Schmiermittelleitungen mit Schmiermittel aus einem Vorratsbehälter versorgt, und nur in bestimmten Abschnitten eines Bearbeitungsvorganges die Schmiermittelzufuhr periodisch unterbricht.

Bei dieser Werkzeugmaschine ist von Nachteil, daß ein sehr aufwendig zu steuerndes Schmiermittelsystem vorgesehen ist.

Häufig finden sich zehn oder mehr Schmierstellen an allgemein bekannten Werkzeugmaschinen, die oft an sehr unzugänglichen Stellen angeordnet sind. Diese Schmierstellen dienen z.B. dazu, die Linearführungen des Spindelstockes in X-, Y- und Z-Richtung zu schmieren. Das Wartungspersonal muß hier auf sämtliche Schmierstellen zugreifen können.

Für eine derartige Wartungsschmierung ist es erforderlich, die Werkzeugmaschine abzustellen und die Verkleidung zumindest teilweise zu entfernen. Das Wartungspersonal muß dann auf zeitaufwendige und mühsame Weise in die Werkzeugmaschine sozusagen hineinkriechen, um sämtliche Schmierstellen zu erreichen, wo in der Regel Schmiernippel vorgesehen sind, die über eine entsprechende Fettpresse eine Schmierung ermöglichen.

Bei derartigen Werkzeugmaschinen mit dezentralisierter manueller Schmierung ist von Nachteil, daß während dieser Wartungsarbeiten die Werkzeugmaschine für längere Zeit stillsteht, so daß diese Stillstandszeiten zu Produktionsausfällen führen. Ferner ist von Nachteil, daß die Tätigkeit des Wartungspersonals nicht nur mühsam sondern häufig auch gefährlich ist, da die häufig ölverschmierten Werkzeugmaschinen scharfe Kanten aufweisen, an denen sich das Wartungspersonal verletzen kann.

Vor diesem Hintergrund ist es Aufgabe der vorliegenden Erfindung, die eingangs genannte Werkzeugmaschine derart weiterzubilden, daß eine manuelle Schmierung bei geringem Zeitaufwand für das Wartungspersonal auf einfache Weise möglich wird, wobei die Konstruktion einfach und preiswert sein soll.

Erfindungsgemäß wird diese Aufgabe bei der eingangs genannten Werkzeugmaschine dadurch gelöst, daß an der Zufuhrstation ein Füllblock für manuelle Schmierung vorgesehen ist, der einen Einlaß für Wartungsschmierung in bestimmten Wartungsintervallen sowie einen Einlaß für Schnellfüllung des Systems von Schmiermittelleitungen aufweist.

Die der Erfindung zugrunde liegende Aufgabe wird auf diese Weise vollkommen gelöst. Die einzelnen Schmierstellen sind z.B. über ein sternförmiges Netz von Schmiermittelleitungen von der Zufuhrstation aus versorgt, so daß bei einer Wartungsschmierung das Personal lediglich noch auf eine einzige Stelle der Werkzeugmaschine zugreifen muß, nämlich dort, wo die Zufuhrstation angeordnet ist. Die einzelnen Schmierstellen können von der Zufuhrstation weit entfernt liegen, da das Schmiermittel über die Schmiermittelleitungen zu den individuellen Schmierstellen geleitet wird.

Dabei ist weiter von Vorteil, daß an ein und demselben Teil Öffnungen für zwei verschiedene Maßnahmen vorgesehen sind, nämlich eine für die übliche Wartung sowie eine weitere, über die das System von Schmiermittelleitungen vor der ersten Inbetriebnahme oder nach größeren Reparaturen/Austauscharbeiten auf schnelle Weise mit Schmiermittel gefüllt werden kann.

In einer Weiterbildung ist es bevorzugt, wenn von dem Füllblock eine Schmiermittelleitung abgeht, die sich dann zu den Schmierstellen hin verzweigt.

Hier ist von Vorteil, daß sozusagen eine baumartige Struktur der Schmiermittelleitungen bereitgestellt wird, so daß das Wartungspersonal lediglich an einem einzigen Schmierpunkt Fett in das System von Schmiermittelleitungen einpressen muß. Auch hierdurch vereinfacht sich die Schmierung noch einmal deutlich, wobei auch der erforderliche Zeitaufwand weiter zurückgeht.

Ein weiterer Vorteil dieser Baumstruktur liegt darin, daß sich die Gesamtlänge der Schmiermittelleitungen wegen der Verzweigungen gegenüber dem sternförmigen Netz deutlich verringert.

Dabei ist es bevorzugt, wenn der Füllblock einen Schmiermittelkanal aufweist, an den die abgehende Schmiermittelleitung angeschlossen ist, sowie zumindest zwei Bohrungen, die seitlich in den Schmiermittelkanal münden, wobei die erste Bohrung mit einem Schmiernippel und die zweite Bohrung mit einem lösbaren Verschluß ersehen ist.

Diese Maßnahme ist konstruktiv von Vorteil, die Parallelschaltung der beiden Einlässe für Wartung und Schnellfüllung erfolgt nämlich auf die denkbar einfachste Weise. Für eine Schnellfüllung muß jetzt lediglich der Verschluß der einen Bohrung gelöst werden, woraufhin dann in diese Bohrung große Mengen an Schmiermittel eingegeben werden können, das jedoch wegen der Rückschlagwirkung nicht aus dem Schmiernippel austreten kann. Während der Wartung ist diese Öffnung für Schnellfüllung durch den Verschluß abgedichtet, so daß jetzt über den Schmiernippel Fett in den Schmiermittelkanal eingedrückt werden kann.

Das insoweit beschriebene System ermöglicht also an einer zentralen Zufuhrstation das Zuführen von Schmiermittel, welches sich dann über das System von Schmiermittelleitungen zu den einzelnen Schmierstellen hin verteilt. Insofern wurde also ein sehr preiswertes und einfach zu bedienendes manuelles Zentralschmiersystem geschaffen. Dieses System hat jedoch den Nachteil, daß die Schmiermittelmenge, die zu den einzelnen Schmierstellen gelangt, von den jeweiligen Längen der Schmiermittelleitungen, deren ggf. stark verkrümmtem Verlauf sowie einem möglicherweise an der Schmierstelle entstehenden Gegendruck abhängt.

Um dieses Problem zu beseitigen, ist es bevorzugt, wenn zumindest einige der Schmierstellen über die Schmiermittelleitungen mit Auslässen zumindest eines Dosierelementes verbunden sind, das an seinem Einlaß ankommendes Schmiermittel in vorbestimmten Mengen an seine mehreren Auslässe abgibt.

Hier ist von Vorteil, daß diese Dosierelemente für die Abgabe definierter Schmiermittelmengen zu den Schmierstellen sorgen, wobei die Zufuhr von Schmiermittel zu den Einlässen der Dosierelemente nicht mengenmäßig gesteuert werden muß. Das Wartungspersonal kann also z.B. mittels einer Fettpresse Schmiermittel in zu den Einlässen der Dosierelemente führende Schmiermittelleitungen einpressen, woraufhin die Dosierelemente dann vorbestimmte Schmiermittelmengen zu den Schmierstellen abgeben.

Derartige Dosierelemente können z.B. elektrisch oder pneumatisch betriebene Mengenverteiler, Pumpen etc. sein.

Es ist in einer Weiterbildung jedoch bevorzugt, wenn das Dosierelement ein durch den Förderdruck des Schmiermittels selbst betätigter Mengenverteiler ist.

Hier ist von Vorteil, daß keine Fremdenergie benötigt wird, um das Dosierelement zu steuern. Derartige Mengenverteiler sind an sich bekannt, sie werden z.B. als Progressivverteiler bezeichnet und in Zentralschmieranlagen eingesetzt, wo ihnen über Pumpen vorbestimmte Mengen von Schmiermittel zugeführt werden. Die Erfinder der vorliegenden Anmeldung haben jetzt jedoch erkannt, daß es überraschenderweise möglich ist, derartige Dosierelemente auch bei einem wie oben beschriebenen manuellen Zentralschmiersystem einzusetzen, obwohl wegen der manuellen Schmierung der Schmiermitteldruck sowie die jeweils eingepreßte Schmiermittelmenge stark variieren.

In einer Weiterbildung ist es dann bevorzugt, wenn mehrere derartige Dosierelemente vorgesehen sind, die so kaskadiert sind, daß ein als Hauptverteiler wirkendes Dosierelement an seinen Auslässen mit Einlässen von als Unterverteiler wirkenden Dosierelementen verbunden ist.

Auf diese Weise ergibt sich eine einfache Baumstruktur, da der Hauptverteiler vorbestimmte Mengen von Schmiermittel nicht direkt zu den Schmierstellen sondern zu weiteren Dosierelementen leitet, die jetzt ihrerseits das ankommende Schmiermittel in vorbestimmten Mengen zu den Schmierstellen abgeben. Diese Kaskadiermöglichkeit von manuell beschickten derartigen Dosierelementen stellt eine weitere überraschende Erkenntnis der Erfinder der vorliegenden Anmeldung dar. Es war nämlich nicht zu erwarten, daß trotz manueller Schmiermittelzufuhr diese sich verzweigende Schmiermittelabgabe so reproduzierbar möglich ist, wie dies bei einem Testaufbau des erfindungsgemäßen Zentralschmiersystems gezeigt werden konnte.

Dabei ist es dann weiter bevorzugt, wenn der Hauptverteiler an seinem Einlaß mit dem Füllblock verbunden und zu diesem im Abstand angeordnet ist.

Diese Maßnahme ist konstruktiv von Vorteil, der Hauptverteiler kann nämlich im Inneren der Werkzeugmaschine in der Nähe der Unterverteiler angeordnet werden, so daß die Schmiermittelleitungen zwischen dem Hauptverteiler und den Unterverteilern sehr kurz sein können. Es ist lediglich eine längere Leitung erforderlich, über die der Hauptverteiler mit der zentralen Zufuhrstation, also dem dort angeordneten Füllblock, verbunden ist.

Weiter ist es bevorzugt, wenn an einigen Dosierelementen Überwachungselemente angeordnet sind, die mit einer zentralen Ablaufsteuerung der Werkzeugmaschine verbunden sind.

Auf diese vorteilhafte Weise ist eine Überwachung der Schmierung möglich, was zu einer Erhöhung der Betriebssicherheit der Werkzeugmaschine führt. Die Überwachungselemente können jetzt nämlich von der zentralen Ablaufsteuerung daraufhin abgefragt werden, ob jedes einzelne Dosierelement auch tatsächlich Schmiermittel abgegeben hat. Da bei der manuellen Schmierung jetzt größere Mengen an Schmiermittel in das System von Schmiermittelleitungen eingedrückt werden müssen, können diese Überwachungselemente weiter für die Erzeugung eines Anzeigesignales verwendet werden, das dem Wartungspersonal angibt, daß nunmehr sämtliche Dosierelemente getaktet haben, daß also sämtliche Schmierstellen abgeschmiert wurden.

Bei einer einfachen Ausführung kann auf diese Überwachungselemente auch verzichtet werden, wobei dann das Wartungspersonal lediglich eine vorbestimmte Menge an Schmiermittel in das System eindrücken muß. Bei dem oben erwähnten Testaufbau ergab sich z.B. eine Startfüllung von ca. 1000 cm³, wobei gemäß Wartungsplan der neuen Werkzeugmaschine alle 2000 Betriebs-Stunden 60 cm³ zur Schmierung nachgeführt werden müssen.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Draufsicht auf die neue Werkzeugmaschine; und
- Fig. 2: das bei der neuen Werkzeugmaschine aus Fig. 1 eingesetzte Zentralschmiersystem.

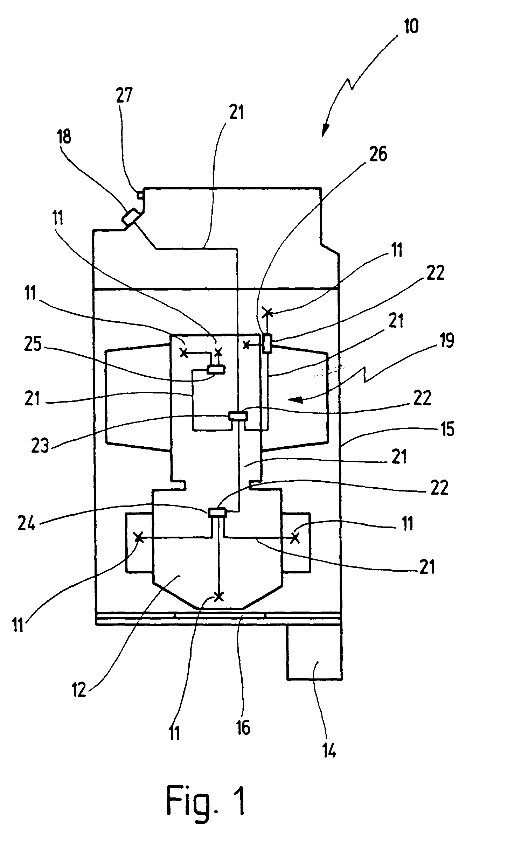

In Fig. 1 ist mit 10 eine erfindungsgemäße Werkzeugmaschine bezeichnet, bei der eine Anzahl von Schmierstellen 11 vorgesehen sind, die mit Kreuzen angedeutet sind. Diesen Schmierstellen 11 muß in bestimmten Wartungsintervallen Schmiermittel zugeführt werden.

Die Werkzeugmaschine 10 ist nur sehr schematisch dargestellt, sie umfaßt einen in 3 Achsen verfahrbaren Spindelkopf 12 sowie ein Bedienerpult 14, das außen an einer Verkleidung 15 der Werkzeugmaschine 10 angeordnet ist. Ferner ist eine Tür 16 in der Verkleidung 15 vorgesehen, über die Werkzeuge und Werkstücke in die Werkzeugmaschine hineingegeben bzw. aus ihr entnommen werden können.

Auf der von der Tür 16 abgelegenen Rückseite weist die Werkzeugmaschine 10 eine zentrale Zufuhrstation 18 für Schmiermittel auf, die mit einem Zentralschmiersystem 19 verbunden ist. Das Zentralschmiersystem 19 umfaßt ein System von Schmiermittelleitungen 21, die die Schmierstellen 11 mit der zentralen Zufuhrstation 18 verbinden.

Die Schmiermittelleitungen 21 sind über Dosierelemente 22 miteinander verbunden, wobei ein als Hauptverteiler 23 wirkendes Dosierelement 22 unmittelbar mit der zentralen Zufuhrstation 18 verbunden ist. An die Auslässe des Hauptverteilers 23 sind drei Unterverteiler 24, 25, 26 angeschlossen, die ihrerseits an ihren Auslässen mit den einzelnen Schmierstellen 11 verbunden sind.

Zu den festgelegten oder am Bedienerpult 14 angezeigten Wartungsintervallen muß sich das Wartungspersonal bei der neuen Werkzeugmaschine 10 jetzt lediglich an deren hintere Seite begeben und dort an der zentralen Zufuhrstation 18 die erforderliche Menge an Schmiermittel in das Zentralschmiersystem eingeben. Dieses eingegebene Schmiermittel verzweigt sich dann über den Hauptverteiler 23 sowie die Unterverteiler 24, 25, 26 zu den einzelnen Schmierstellen 11. Wenn die Schmierung beendet ist, drückt das Wartungspersonal auf einen Rücksetzknopf 27, der in der Nähe der zentralen Zufuhrstation 18 angeordnet ist. Das Drücken des Rücksetzknopfes 27 wird von einer zentralen Ablaufsteuerung der Werkzeugmaschine 10 erkannt, die daraufhin die Wartungsanzeige an dem Bedienerpult 14 wieder löscht.

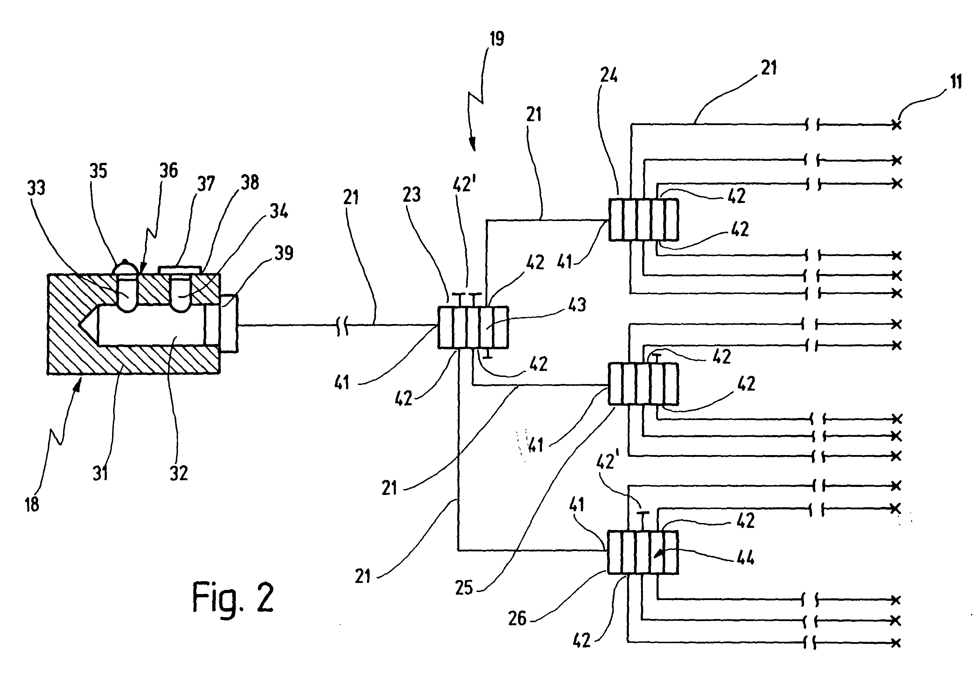

In Fig. 2 ist das Zentralschmiersystem für die Werkzeugmaschine 10 aus Fig. 1 schematisch dargestellt.

Es ist zu erkennen, daß die zentrale Zufuhrstation 18 einen Füllblock 31 umfaßt, in dem ein Schmiermittelkanal 32 vorgesehen ist. In den Schmiermittelkanal 32 münden seitlich zwei Bohrungen 33 und 34, wobei die Bohrung 33 einen Schmiernippel 35 auf ihrem Einlaß 36 aufweist. Die Bohrung 34 weist einen lösbaren Verschluß 37 an ihrem Einlaß 38 auf. Der Schmiermittelkanal 32 ist über ein Reduzierstück 39 mit einer Schmiermittelleitung 21 verbunden.

Der Einlaß 36 dient bei dem Füllblock 31 zur üblichen Wartungsschmierung, wobei über eine Fettpresse Schmiermittel durch den Schmiernippel 35 in den Schmiermittelkanal 32 gelangt. Da der Einlaß 38 durch den Verschluß 37 abgedichtet ist, drückt sich dieses Schmiermittel aus dem Schmiermittelkanal 32 heraus in die Schmiermittelleitung 21.

Während der Endmontage der neuen Werkzeugmaschine 10 oder nach größeren Reparaturarbeiten kann über den großen Einlaß 38 nach Lösen des Verschlusses 37 eine Schnelladung des Zentralschmiersystems 19 mit Schmiermittel erfolgen. Dazu ist es lediglich erforderlich, den Verschluß 37 zu lösen, der Schmiernippel 35 kann wegen seiner Rückschlagwirkung in der Bohrung 33 verbleiben, die durch ihn abgedichtet ist.

Jedes der Dosierelemente 22, die als Hauptverteiler 23 sowie Unterverteiler 24, 25, 26 wirken, weist einen Einlaß 41 sowie mehrere Auslässe 42 auf. An dem Einlaß 41 zugeführtes Schmiermittel wird lediglich durch den Druck des geförderten Schmiermittels 41 nacheinander zu vorbestimmten Mengen auf die Auslässe 42 verteilt. Die Dosierelemente 22 in Fig. 2 umfassen alle drei Blöcke 43, von denen jeder jeweils zwei Auslässe 42, 42' aufweist. Es ist jedoch auch möglich, einen der Auslässe zu verschließen, wie dies bei 42' angedeutet ist, wodurch dann an dem offenen Auslaß 42 die doppelte Schmiermittelmenge abgegeben wird. Zur Versorgung der Unterverteiler 24, 25, 26 sind bei dem Hauptverteiler alle zweiten Auslässe 42' geschlossen, damit ein zuverlässiger Betrieb möglich ist.

Derartige Dosierelemente sind an sich für pumpengesteuerte Zentralschmieranlagen bekannt, sie werden z.B. Progressivverteiler genannt. Ein derartiger Progressivverteiler ist der VOGEL Progressivverteiler VPB.

Bei derartigen Progressivverteilern befindet sich in jedem der nebeneinanderliegenden Blöcke jeweils ein Doppelkolben, wobei die doppelten Kolbenkammern untereinander jeweils über Kanäle derart miteinander verbunden sind, daß die Kolben sich in ihren entsprechenden Endlagen gegenseitig verriegeln. Ein Schmiermitteldruck bewegt jetzt jeweils nur einen Kolben, der eine bestimmte Schmiermittelmenge ausstößt und am Ende seiner Hubbewegung dann Kanäle öffnet bzw. schließt, so daß jetzt der nächstfolgende Kolben durch den Schmiermitteldruck am Einlaß des Dosierelementes bewegt wird. Mit anderen Worten, durch den am Einlaß anstehenden Schmiermitteldruck wird ein Kolben nach dem anderen bewegt, wobei jede Kolbenbewegung zur Abgabe einer bestimmten Schmiermittelmenge über einen der Auslässe des Dosierelementes 22 führt.

In Fig. 2 ist ferner bei 44 noch ein Überwachungselement angedeutet, das die Bewegung eines Kolbens in einem Block 43 erkennt und diese an eine zentrale Ablaufsteuerung meldet. Anhand dieser Meldung erkennt die zentrale Ablaufsteuerung, ob das entsprechende Dosierelement 22 einen Kolbenhub durchgeführt hat und somit Schmiermittel abgegeben wurde. Auf diese Weise ist eine vollständige Überwachung des Zentralschmiersystems 19 möglich.

Zurückkehrend zu Fig. 1 ist noch zu bemerken, daß der Hauptverteiler 23 in der Nähe der Unterverteiler 24, 25, 26 angeordnet ist, so daß die diese Verteiler verbindenden Schmiermittelleitungen 21 relativ kurz sein können. Es ist lediglich eine längere Schmiermittelleitung 21 erforderlich, die den Einlaß 41 des Hauptverteilers 23 mit dem Füllblock 31 verbindet. Während der Wartungsschmierung wird jetzt manuell Schmiermittel über den Schmiernippel 35 in den Schmiermittelkanal 32 eingepreßt, woraufhin der Hauptverteiler 23 dann das an seinem Einlaß 41 ankommende Schmiermittel über seine drei Blöcke 43 auf die Unterverteiler 24, 25, 26 zu gleichen Mengen verteilt. Die Unterverteiler 24, 25, 26 takten jetzt ihre Blöcke 43 der Reihe nach durch und geben dabei Schmiermittel über die Schmiermittelleitungen 21 zu den Schmierstellen 11 ab. Die Funktion der einzelnen Verteiler 23, 24, 25 und 26 erfolgt lediglich über den Schmiermitteldruck, der manuell beim Einpressen des Schmiermittels durch den Schmiernippel 35 aufgebaut wird, eine Fremdenergieversorgung ist nicht erforderlich, auch auf Pumpen zur Förderung des Schmiermittels konnte verzichtet werden.

## Patentansprüche

1. Werkzeugmaschine mit einer Anzahl von Schmierstellen (11), denen Schmiermittel zugeführt werden muß, wobei zumindest einige der Schmierstellen (11) durch ein System von Schmiermittelleitungen (21) mit einer zentralen Zufuhrstation (18) für Schmiermittel verbunden sind,
**dadurch gekennzeichnet, daß** an der Zufuhrstation (18) ein Füllblock (31) für manuelle Schmierung vorgesehen ist, der einen Einlaß (36) für Wartungsschmierung in bestimmten Wartungsintervallen sowie einen Einlaß (38) für Schnellfüllung des Systems von Schmiermittelleitungen (21) aufweist.

2. Werkzeugmaschine nach Anspruch 1, **dadurch gekennzeichnet, daß** von dem Füllblock (31) eine Schmiermittelleitung (21) abgeht, die sich dann zu den Schmierstellen (11) hin verzweigt.

3. Werkzeugmaschine nach Anspruch 1 oder 2, **dadurch gekennzeichnet, daß** der Füllblock (31) einen Schmiermittelkanal (32) aufweist, an den die abgehende Schmiermittelleitung (21) angeschlossen ist, sowie zumindest zwei Bohrungen (33, 34), die seitlich in den Schmiermittelkanal (32) münden, wobei die erste Bohrung (33) mit einem Schmiernippel (35) und die zweite Bohrung (34) mit einem lösbaren Verschluß (37) versehen ist.

4. Werkzeugmaschine nach einem der Ansprüche 1 bis 3, **dadurch gekennzeichnet, daß** zumindest einige der Schmierstellen (11) über die Schmiermittelleitungen (21) mit Auslässen (42) zumindest eines Dosierelementes (22) verbunden sind, das an seinem Einlaß (41) ankommendes Schmiermittel in vorbestimmten Mengen an seine mehreren Auslässe (42) gibt.

5. Werkzeugmaschine nach Anspruch 4, **dadurch gekennzeichnet, daß** das Dosierelement (22) ein durch den Förderdruck des Schmiermittels betätigter Mengenverteiler ist.

6. Werkzeugmaschine nach Anspruch 4 oder 5, **dadurch gekennzeichnet, daß** mehrere Dosierelemente (22) vorgesehen sind, die derart kaskadiert sind, daß ein als Hauptverteiler (23) wirkendes Dosierelement (22) an seinen Auslässen (42) mit Einlässen (41) von als Unterverteiler (24, 25, 26) wirkenden Dosierelementen (22) verbunden ist.

7. Werkzeugmaschine nach Anspruch 6, **dadurch gekennzeichnet, daß** der Hauptverteiler (23) an seinem Einlaß (41) mit dem Füllblock (31) verbunden und zu diesem im Abstand angeordnet ist.

8. Werkzeugmaschine nach einem der Ansprüche 4 bis 7, **dadurch gekennzeichnet, daß** an einigen Dosierelementen (22) Überwachungselemente (44) angeordnet sind, die mit einer zentralen Ablaufsteuerung der Werkzeugmaschine (10) verbunden sind.

## Claims

1. Machine tool with a plurality of lubrication points (11) to which lubricant must be delivered, whereby at least some of the lubrication points (11) are connected, via a system of lubrication lines (21), to a central delivery station (18) for lubricant,
**characterized in that** at the delivery station (18) a filler block (31) for manual lubrication is provided, the filler block having one inlet (36) for maintenance lubrication in predetermined maintenance intervals as well as an inlet (38) for rapid filling of the system of lubrication lines (21).

2. The machine tool of claim 1, **characterized in that** one lubrication line (21) departs from the filler block (31) and then branches out to the lubrication points (11).

3. The machine tool of claim 1 or 2, **characterized in that** the filler block (31) comprises a lubricant conduit (32) to which the departing lubrication line (21) is connected, as well as at least two orifices (33, 34) that open into the sides of the lubricant conduit (32), thereby the first orifice (33) is provided with a lubrication nipple and the second orifice (34) is provided with a removable cap (37).

4. The machine tool of any of claims 1 - 3, **characterized in that** at least some of the lubrication points (11) are connected via the lubrication lines (21) to outlets (42) of at least one metering element (22) that dispenses lubricant arriving at its inlet (41) in predetermined quantities to its multiple outlets (42).

5. The machine tool of claim 4, **characterized in that** the metering element (22) is a volumetric distributor actuated by the delivery pressure of the lubricant.

6. The machine tool of claim 4 or 5, **characterized in that** multiple metering elements (22) are provided and are cascaded in such a way that one metering element (22) acting as a main distributor (23) is connected at its outlets (42) to inlets (41) of metering elements (22) acting as subsidiary distributors (24, 25, 26).

7. The machine tool of claim 6, **characterized in that** the main distributor (43) is connected at its inlet (41) to the filler block (31) and is arranged at a distance to the latter.

8. The machine tool of any of claims 4 - 7, **characterized in that** on some metering elements (22) monitoring elements (44) are arranged that are connected to a central sequence controller of the machine tool (10).

## Revendications

1. Machine-outil comportant une multiplicité d'emplacements de lubrification (11), auxquels un lubrifiant doit être acheminé, certains au moins des emplacements de lubrification (11) étant reliés par un système de conduits de lubrifiant (21) à un poste d'alimentation central (18) pour lubrifiant,
**caractérisée en ce qu'**au poste d'alimentation (18) est prévu un bloc de remplissage (31) pour lubrification manuelle, qui comporte une entrée (36) pour lubrification d'entretien à intervalles d'entretien déterminés, ainsi qu'une entrée (38) pour remplissage rapide du système de conduits de lubrifiant (21).

2. Machine-outil selon la revendication 1, **caractérisée en ce que** du bloc de remplissage (31) part un conduit de lubrifiant (21) qui se ramifie ensuite vers les emplacements de lubrification (11).

3. Machine-outil selon la revendication 1 ou 2, **caractérisée en ce que** le bloc de remplissage (31) comporte un canal de lubrifiant (32) auquel est raccordé le conduit de lubrifiant (21) partant, ainsi qu'au moins deux perçages (33, 34) qui débouchent latéralement dans le canal de lubrifiant (32), le premier perçage (33) étant pourvu d'un raccord de lubrification (35) et le deuxième perçage (34) d'une fermeture (37) amovible.

4. Machine-outil selon l'une des revendications 1 à 3, **caractérisée en ce qu'**au moins certains des emplacements de lubrification (11) sont reliés, par les conduits de lubrifiant (21), à des sorties (42) d'au moins un élément de dosage (22), lequel délivre à ses multiples sorties (42) des quantités prédéterminées de lubrifiant arrivant à son entrée (41).

5. Machine-outil selon la revendication 4, **caractérisée en ce que** l'élément de dosage (22) est un distributeur quantitatif actionné par la pression de transport du lubrifiant.

6. Machine-outil selon la revendication 4 ou 5, **caractérisée en ce que** sont prévus plusieurs éléments de dosage (22) qui sont disposés en cascade de manière qu'un élément de dosage (22), agissant comme distributeur principal (23), soit relié par ses sorties (42) à des entrées (41) d'éléments de dosage (22) agissant comme des sous-distributeurs (24, 25, 26).

7. Machine-outil selon la revendication 6, **caractérisée en ce que** le distributeur principal (23) est relié par son entrée (41) au bloc de remplissage (31) et est disposé à distance de celui-ci.

8. Machine-outil selon l'une des revendications 4 à 7, **caractérisée en ce que** sont disposés, au droit de certains éléments de dosage (22), des éléments de surveillance (44) qui sont reliés à une commande séquentielle centrale de la machine-outil (10).
